# EUROPÄISCHE PATENTSCHRIFT

(11) **EP 2 738 309 B1**
(45) Veröffentlichungstag und Bekanntmachung des Hinweises auf die Patenterteilung: **30.03.2016**
(21) Anmeldenummer: 13198268.8
(22) Anmeldetag: 13.12.2007
(51) Int. Cl.: E01C 23/088

(54) **Straßenbaumaschine sowie Verfahren zur Messung der Frästiefe**
Street construction machine and method for measuring milling cutter depth
Engin de construction routière et procédé de mesure de la profondeur de la fraise

(30) Priorität: 22.12.2006 DE 102006062129
(43) Veröffentlichungstag der Anmeldung: 04.06.2014
(62) Teilanmeldung aus: 07123179.9
(73) Patentinhaber: Wirtgen GmbH, 53578 Windhagen (DE)
(72) Erfinder: Berning, Christian, 50321 Brühl (DE); Simons, Dieter, 53567 Buchholz (DE)
(74) Vertreter: von Kreisler Selting Werner - Partnerschaft von Patentanwälten und Rechtsanwälten mbB

(56) Entgegenhaltungen:
- US-A- 4 041 623
- US-A- 4 139 318
- US-A- 4 140 420

## Beschreibung

Die Erfindung betrifft eine selbstfahrende Straßenbaumaschine, insbesondere eine Kaltfräse, nach dem Oberbegriff des Anspruchs 1, sowie ein Verfahren zur Messung der Frästiefe nach dem Oberbegriff des Anspruchs 14.

Bei derartigen Straßenbaumaschinen wird der Maschinenrahmen von einem Fahrwerk mit Rädern oder Kettenlaufwerken getragen, die über Hubsäulen mit dem Maschinenrahmen verbunden sind, wobei die Hubsäulen es ermöglichen, den Maschinenrahmen in einer Horizontalebene zu halten oder bodenparallel oder mit einer vorbestimmten Längs- und/oder Querneigung.

An dem Maschinenrahmen ist eine Fräswalze zum Bearbeiten einer Boden- oder Verkehrsfläche gelagert.

In der Nähe der Stirnseiten der Fräswalze sind an einer Außenwand der Straßenfräsmaschine höhenverstellbare Seitenschilder als Kantenschutz vorgesehen, die im Betrieb auf der Boden- oder Verkehrsfläche an den seitlichen ungefrästen Kanten der Frässpur aufliegen. In Fahrtrichtung hinter der Fräswalze befindet sich eine höhenverstellbare Abstreifeinrichtung, die im Betrieb in die von der Fräswalze erzeugte Frässpur absenkbar ist, um in der Frässpur verbliebenes Fräsmaterial abzuziehen. Die Straßenfräsmaschine weist des weiteren eine Steuereinrichtung zum Steuern der Frästiefe der Fräswalze auf.

Bei den bekannten Straßenfräsmaschinen besteht das Problem, dass die Steuerung der Frästiefe nicht ausreichend genau ist und dass aus diesem Grund die Frästiefe wiederholt während der Fräsbearbeitung manuell nachgemessen werden muss. Insbesondere in den Fällen, in denen eine harte Verkehrsfläche, z.B. Beton gefräst wird, entsteht ein hoher Verschleiß an den Werkzeugen, so dass die eingestellte Frästiefe durch den abnehmenden Schnittkreisdurchmesser verfälscht wird. So kann der Verschleiß der Werkzeuge beim Fräsen von Beton bereits nach wenigen 100m einen Unterschied im Fräsradius von 15 mm herbeiführen, so dass eine Messung der Verlagerung z.B. von Seitenschildern relativ zum Maschinenrahmen nicht ausreichend genau ist. Ist die Frästiefe nicht ausreichend, muss eine zeitaufwändige Nachbearbeitung der Frässpur erfolgen. Ist die Frässpur zu tief, muss anschließend mehr Baumaterial neu aufgetragen werden, um das gewünschte Boden- oder Verkehrsflächenniveau zu erreichen.

Das Dokument US 4139318 offenbart eine selbstfahrende Straßenbaumaschine mit den Merkmalen des Oberbegriffs des Anspruchs 1 und ein Verfahren zum Messen der Frästiefe mit den Merkmalen des Oberbegriffs des Anspruchs 14.

Der Erfindung liegt daher die Aufgabe zugrunde, die Genauigkeit der Frästiefenmessung während des Betriebs einer Straßenfräsmaschine zu verbessern und dadurch die Abweichungen von einer vorgegebenen Frästiefe zu minimieren.

Zur Lösung dieser Aufgabe dienen die Merkmale des Anspruchs 1 bzw. 14.

Erfindungsgemäß liegt die mindestens eine erste Tasteinrichtung auf der zu bearbeitenden Boden- oder Verkehrsfläche auf und eine zweite Tasteinrichtung ist auf die Oberfläche der Frässpur absenkbar, wobei

mindestens eine Messeinrichtung die Verlagerung der ersten Tasteinrichtung relativ zu der zweiten Tasteinrichtung oder jeweils die Verlagerung der ersten und der zweiten Tasteinrichtung relativ zu dem Maschinenrahmen erfasst, wobei die Steuerung aus den Messwerten der mindestens einen Messeinrichtung die aktuelle Frästiefe der Fräswalze ermittelt. Die Steuerung kann aus den Messwerten der mindestens einen Messeinrichtung die Frästiefe in Höhe der der zweiten Tasteinrichtung ermitteln.

Dabei erfolgt die Messung vorzugsweise in Höhe der zweiten Tasteinrichtung. Alternativ kann die Steuerung aus den Messwerten der mindestens einen Messeinrichtung die aktuelle Frästiefe der Fräswalze in Höhe der Fräwalzenachse ermitteln. Die erfolgt vorzugsweise mit Hilfe einer Berechnung, die auch eine Schräglage des Maschinenrahmens berücksichtigen kann.

Die Messeinrichtungen bestehen vorzugsweise aus Wegmesseinrichtungen.

In einem Ausführungsbeispiel ist vorgesehen, dass die erste Tasteinrichtung aus mindestens einem der beidseitig an den Stirnseiten der Fräswalze relativ zu dem Maschinenrahmen höhenverstellbaren und schwenkbar angeordneten Seitenschildern besteht. Die Seitenschilder liegen auf der Boden- oder Verkehrsfläche auf oder werden gegen diese angepresst, so dass deren Lageveränderung relativ zu dem Maschinenrahmen während des Betriebs eine genaue Frästiefenerfassung ermöglichen, wenn zusätzlich eine Messung der Lageveränderung einer zweiten Tasteinrichtung in der Frässpur relativ zu dem Maschinenrahmen erfolgt.

Bei Seitenschildern besteht der Vorteil, dass diese an ihren Unterkanten verschleißgeschützt sind.

Bei einer weiteren Alternative kann vorgesehen sein, dass die Abstreifeinrichtung an der den Seitenschildern zugewandeten Seitenkanten jeweils eine Messeinrichtung aufweist, die die relative Verlagerung der Abstreifeinrichtung zu dem wenigstens einen benachbarten Seitenschild oder die relative Verlagerung mindestens eines Seitenschildes zu der Abstreifeinrichtung misst.

Nach einer weiteren alternativen Ausführungsform kann die Abstreifeinrichtung mindestens einen höhenverstellbaren, in der Abstreifeinrichtung vertikal und linear geführten quer zur Fahrtrichtung verlaufenden Balken als erste Tasteinrichtung aufweisen, der neben der Frässpur auf der Boden- oder Verkehrfläche aufliegt und dessen Position relativ zu der Abstreifeinrichtung, vorzugsweise hinsichtlich Höhe und/oder Neigung, von der Messeinrichtung messbar ist.

Die Seitenschilder können aufgrund der Schwerkraft auf den Kanten der Boden- oder Verkehrfläche neben der von der Fräsmaschine gefrästen Frässpur aufliegen, oder alternativ durch hydraulische Einrichtungen auf die Kanten angedrückt werden.

Auch die Abstreifeinrichtung kann mit Hilfe hydraulischer Einrichtungen auf die Oberfläche der Frässpur angedrückt werden.

Die hydraulischen Einrichtungen zum Andrücken der Seitenschilder auf die Boden- oder Verkehrsfläche bzw. zum Andrücken der Abstreifeinrichtung auf dem Boden der Frässpur können integrierte Wegmesssysteme aufweisen.

Zum Abheben oder Absenken der Seitenschilder und/oder der Abstreifeinrichtung können mehrere vorzugsweise jeweils zwei Kolbenzylindereinheiten mit integrierten Wegmesssystemen vorgesehen sein, aus deren Wegmesssignalen die Steuerung die aktuelle Frästiefe aus der relativen Differenz der Positionen der Abstreifeinrichtung und der mindestens einen ersten Tasteinrichtung berechnet.

Die Steuerung, die die Wegmesssignale der Messeinrichtung erhält, kann den Hubzustand der in Fahrtrichtung hinteren Hubsäulen automatisch zur Herstellung der Parallelität des Maschinenrahmens zu der Boden- oder Verkehrfläche einer gewünschten Frästiefe regeln.

Die auf der Verkehrsfläche schwenkbar gegenüber dem Maschinenrahmen aufliegenden Seitenschilder können in Fahrtrichtung mit Abstand voneinander angeordnete Messeinrichtungen aufweisen, wobei die Steuerung aus der Differenz der Messsignale der Seitenschilder und der Abstreifeinrichtung die Längsneigung und/oder Querneigung des Maschinenrahmens zu der Boden- oder Verkehrsfläche messen kann.

Die vorderen und/oder hinteren Hubsäulen können ein Wegmesssystem zum Erfassen des Hubzustandes aufweisen. Die Steuerung, die die Wegmesssignale der Messeinrichtung erhält, kann den Zustand aller Hubsäulen derart regeln, dass der Maschinenrahmen eine vorbestimmte Neigung oder einen vorbestimmten wegstreckenabhängigen Querneigungsverlauf quer zur Fahrtrichtung aufweist.

Vorzugsweise wird der aktuelle Sollwert für die Frästiefe der Fräswalze mit Hilfe der vorderen Hubsäulen eingestellt.

Im Folgenden werden unter Bezugnahme auf die Zeichnungen Ausführungsbeispiele der Erfindung näher erläutert. Es zeigen:
- Fig. 1: eine Kaltfräse,
- Fig. 2: eine an dem Abstreifschild befestigte erste Tasteinrichtung,
- Fig. 3: zwei Kolbenzylindereinheiten zum Anheben oder Absenken des Abstreifschildes einer Abstreifeinrichtung,
- Fig. 4: eine optische Vorrichtung zur Messung der Wegdifferenz zwischen den Seitenschildern und der Abstreifeinrichtung,
- Fig. 5: eine Seilzugmesseinrichtung zwischen den Seitenschildern und der Abstreifeinrichtung,
- Fig. 6: ein bevorzugtes Ausführungsbeispiel, und
- Fig. 7 a,b,c: eine schematische Darstellung des an dem Abstreifschild der Abstreifeinrichtung entstehenden Messfehlers bei fehlender Parallelität des Maschinenrahmens mit der Boden- und Verkehrsfläche.

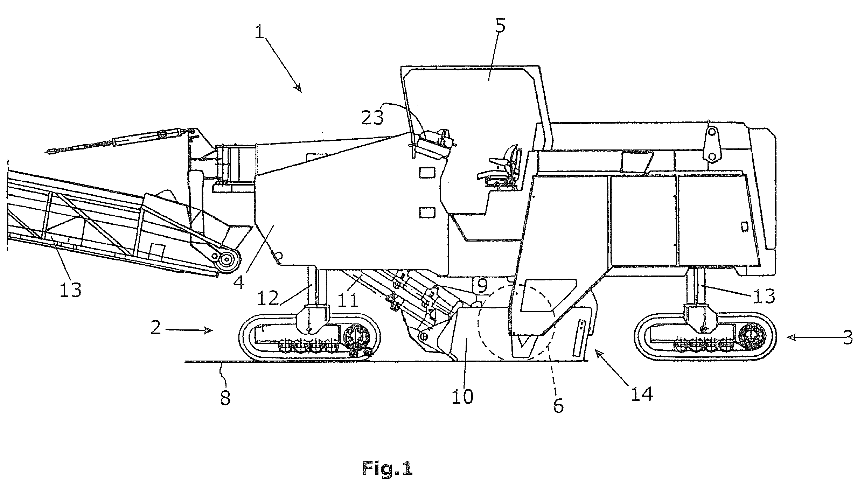

Die in Fig. 1 dargestellte Straßenfräsmaschine weist einen Maschinenrahmen 4 auf, der von einem Fahrwerk mit zwei vorderen Kettenlaufwerken 2 und mindestens einem hinteren Kettenlaufwerk 3 getragen wird. Die Kettenlaufwerke 2, 3 sind über Hubsäulen 12, 13 mit dem Maschinenrahmen 4 verbunden. Es versteht sich, dass anstelle der Kettenlaufwerke 2, 3 auch Räder verwendet werden können.

Mit Hilfe der Hubsäulen 12, 13 kann der Maschinenrahmen 4 angehoben oder abgesenkt oder in eine vorgegebene Schräglage relativ zu der zu bearbeitenden Boden- oder Verkehrsfläche 8 gebracht werden. Die in dem Maschinenrahmen 4 gelagerte Fräswalze 6 ist von einem Walzenkasten 9 umgeben, der in Fahrtrichtung vorne zu einem ersten Transportband 11 offen ist, der das gefräste Material im vorderen Bereich des Maschinenrahmens 4 auf eine zweite Transporteinrichtung 13 überträgt. Die zweite Transporteinrichtung 13, mit der das abgefräste Material zum Beispiel auf einen Lastkraftwagen abwerfbar ist, ist in Fig. 1 wegen ihrer Länge nicht vollständig dargestellt. Hinter der Fräswalze 6 ist eine höhenverstellbare Abstreifeinrichtung 14 angeordnet, die im Betrieb mit einem Abstreifschild 15 in die von der Fräswalze 6 erzeugte Frässpur 17 eingreift und den Grund der Frässpur 17 abzieht, so dass sich hinter dem Abstreifschild kein abgefrästes Material mehr in der Frässpur 17 befindet.

Oberhalb der Fräswalze 6 ist ein Fahrstand 5 mit einem Bedienpult für den Fahrzeugführer für alle Steuerfunktionen des Fahr- und des Fräsbetriebes angeordnet. Darin enthalten ist auch eine Steuereinrichtung 23 zum Steuern der Frästiefe der Fräswalze 6.

Die beidseitig in Nähe der Stirnseite der Fräswalze 6 angeordneten Seitenschilder 10 und die Abstreifeinrichtung 14 sind mit Messeinrichtungen 16 versehen, die die Bestimmung der aktuellen Frästiefe in Höhe der Abstreifeinrichtung 14 bzw. die Berechnung der Frästiefe in Höhe der Drehachse der Fräswalze ermöglichen. Dabei wird die Frästiefe in einer zur Boden- oder Verkehrsfläche orthogonalen Ebene bestimmt, die parallel zur Drehachse der Fräswalze verläuft und in der die Drehachse liegt.

Dabei kann die Position einer ersten Tasteinrichtung, z.B. die Seitenschilder 10, auf der Boden- oder Verkehrsfläche 8 und/oder die Absenkung einer zweiten Tasteinrichtung, z.B. der Abstreifeinrichtung erfasst werden. Vorzugsweise aus Wegmesseinrichtungen bestehenden Messeinrichtungen 16 messen die Verlagerungen der Tasteinrichtungen z.B. der Seitenschilder 10 oder eines Balkens 20 oder des Abstreifschildes 15 in Relation zu dem Maschinenrahmen 4 oder relativ zueinander.

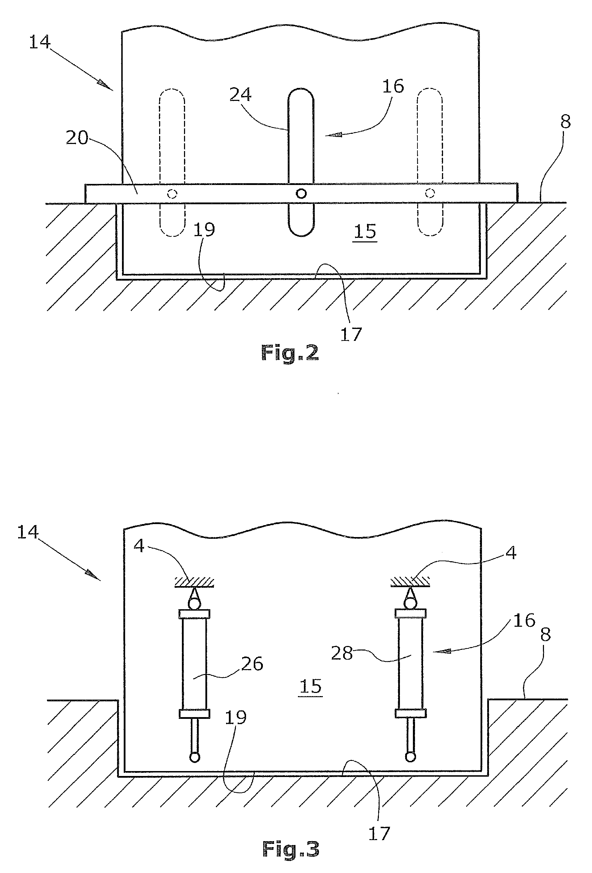

Das Ausführungsbeispiel der Fig. 2 zeigt einen Balken 20 als Tasteinrichtung, der auf der Boden- oder Verkehrsfläche 8 aufliegt und der dem Abstreifschild 15 der Abstreifeinrichtung in einem linear und orthogonal zu der Unterkante 19 des Abstreifschildes 15 verlaufenden Schlitz 24 geführt ist. Es versteht sich, dass auch zwei zueinander parallele Schlitze 24 in dem Abstreifschild 15 vorgesehen sein können, oder dass der Balken 20 als Tasteinrichtung in anderer Weise an der Abstreifeinrichtung 14 höhenverstellbar geführt sein kann. Die Messeinrichtung 16 in Form einer Wegmesseinrichtung erfasst die Verschiebung des Balkens 20 in Relation zu der Abstreifeinrichtung 14. Im Falle von zwei mit horizontalem Abstand voneinander verlaufenden Schlitzen 24 besteht die Möglichkeit, sowohl die Frästiefe auf der linken Seite der Frässpur 17 als auch auf der rechten Seite der Frässpur 17 separat zu erfassen. Außerdem besteht dadurch die Möglichkeit, eine Schräglage des Maschinenrahmens 4 in Relation zu der Boden- oder Verkehrsfläche 8 festzustellen.

Fig. 3 zeigt ein weiteres Ausführungsbeispiel, bei dem das Abstreifschild 15 der Abstreifeinrichtung 14 mit Hilfe von hydraulischen Einrichtungen auf- und abbewegbar ist. Die hydraulischen Einrichtungen bestehen aus Kolbenzylindereinheiten 26, 28 mit integriertem Wegmesssystem. Dies bedeutet, dass die Kolbenzylindereinheiten 26, 28 nicht nur die Hubbewegung der Abstreifeinrichtung ermöglichen, sondern darüber hinaus auch ein Wegsignal erzeugen.

Wie aus Fig. 3 ersichtlich ist, sind die Kolbenzylindereinheiten 26, 28 an einem Ende mit dem Maschinenrahmen 4 gekoppelt und an dem anderen Ende mit dem Abstreifschild 15.

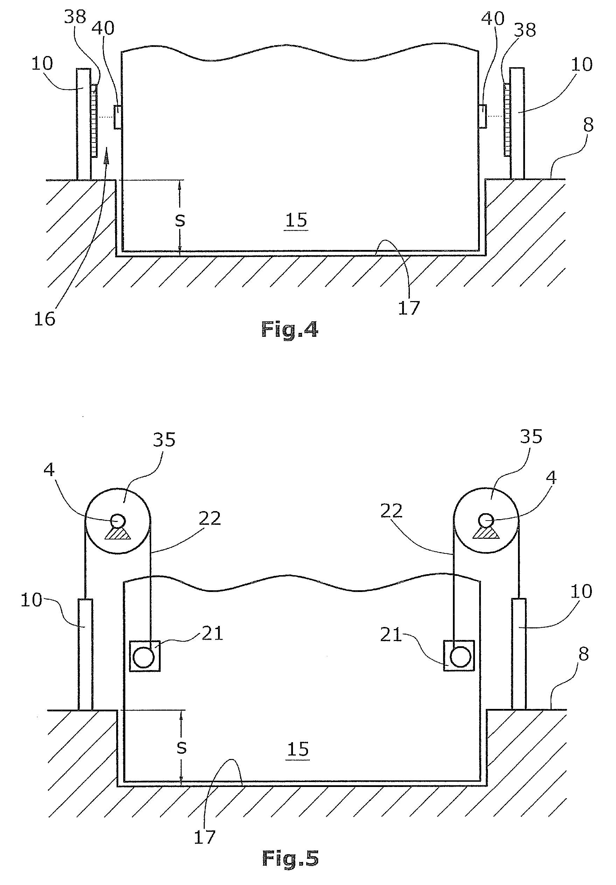

Fig. 4 zeigt ein Ausführungsbeispiel, bei dem die Relativbewegung zwischen den Seitenschildern 10 und dem Abstreifschild 15 unmittelbar gemessen wird, um die Frästiefe der Frässpur 17 zu erfassen. Hierzu sind beispielsweise an den Seitenschildern 10 und jeweils gegenüberliegend an dem Abstreifschild 15 Elemente 38,40 der Messeinrichtung 16 angeordnet, die die Erfassung der relativen Verlagerung des Abstreifschildes 15 in Relation zu den Seitenschildern 10 ermöglichen. Diese Verlagerung entspricht der Frästiefe s in Fig. 4. Beispielsweise kann eine derartige Messeinrichtung, die die relative Verlagerung misst, aus einem optischen System, z.B. durch Ablesen einer Skalierung mit einem optischen Sensor, oder einem elektromagnetischen oder induktivem System bestehen.

Alternativ kann wie in Fig. 5 gezeigt das relative Wegmesssystem zwischen den Seitenschildern 10 und dem Abstreifschild 15 auch aus einem Seilzug 22 in Kombination mit einem Seilzugsensor 21 bestehen. Der Seilzug 22 ist einerseits mit dem Abstreifschild 15 der Abstreifeinrichtung 14 und andererseits mit mindestens einem der Seitenschilder 10 über eine Umlenkrolle 35 gekoppelt, so dass das Signal des Seilzugsensors 21 unmittelbar den aktuellen Frästiefenwert anzeigen kann.

Die Seitenschilder 10 können selbst als erste Tasteinrichtung verwendet werden, indem ihre Lage mit Hilfe von einem Seilzug und einem Seilzugsensor oder mit Hilfe von Kolbenzylindereinheiten 30, 32 mit integrierten Wegmesseinrichtungen in Relation zu dem Maschinenrahmen 4 oder der zweiten Tasteinrichtung überwacht wird.

Beispielsweise können die Messeinrichtungen auch die Verlagerung der Seitenschilder 10 in Relation zu dem Maschinenrahmen 4 messen. Im Falle von zwei Messeinrichtungen in Fahrtrichtung vorne und hinten der Seitenschilder 10 besteht auch die Möglichkeit die Längsneigung des Maschinenrahmens 4 in Relation zur Boden- oder Verkehrsfläche 8 oder durch einen Vergleich der Messwerte beider Seitenschilder 10 auf beiden Seiten der Fräswalze 6 auch die Querneigung des Maschinenrahmens 4 zu ermitteln.

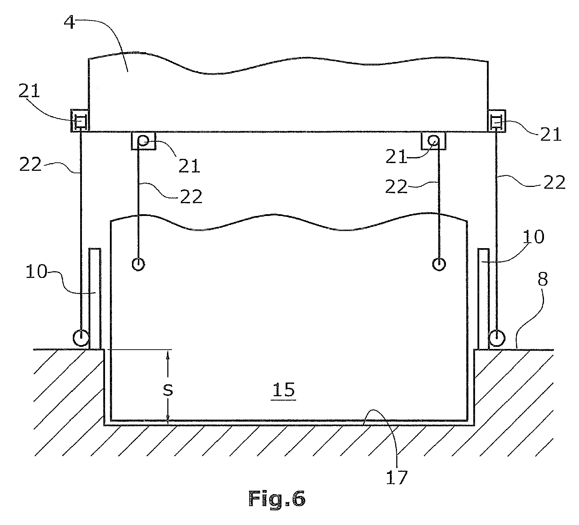

Fig. 6 zeigte eine bevorzugte Ausführungsform, bei der an beiden Seiten der Abstreifeinrichtung 15 Seilzüge 22 mit am Maschinenrahmen 4 befestigten Seilzugsensoren 21 angeordnet sind. Die Seitenschilder 10 sind ebenfalls mit Seilzügen 22 und an dem Maschinenrahmen 4 befestigten Seilzugsensoren 21 versehen, und zwar beiderseits der Maschine. Die Frästiefe s wird aus der Differenz der Messwerte der Seilzugsensoren 21 für die Seitenschilder 10 und der Seilzugsensoren 21 der Abstreifeinrichtung 15 ermittelt. Dabei soll die Messung vorzugsweise in der gleichen im Wesentlichen vertikalen Ebene erfolgen, um Messfehler zu vermeiden.

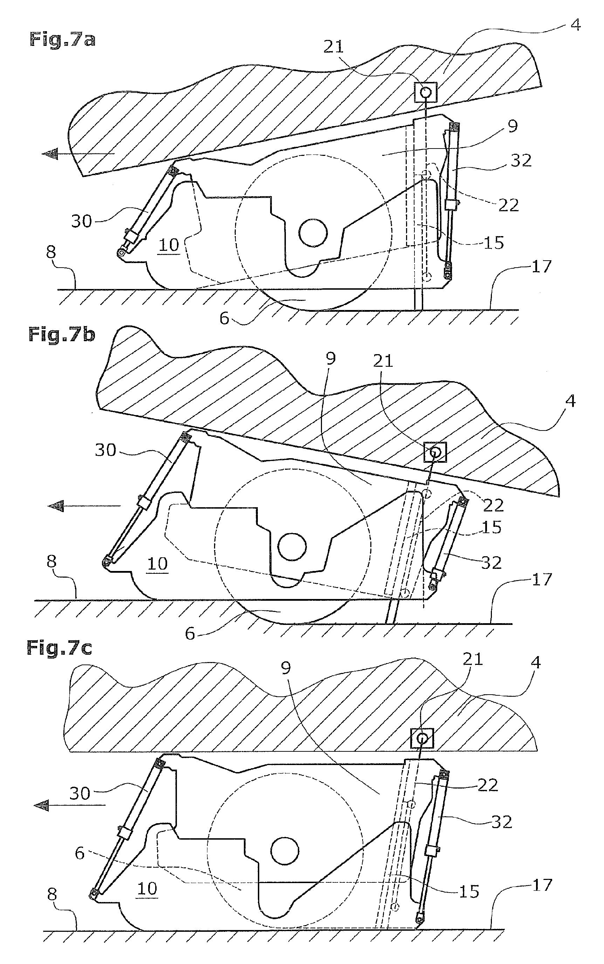

In Fign. 7a bis 7c sind die Seilzugsensoren 21 für die Seitenschilder 10 und die Abstreifschilder 14 dargestellt, wobei in den Zeichnungen nur ein Seilzugsensor 21 angedeutet ist, weil die Seilzugsensoren im wesentlichen in der gleichen Ebene hintereinander liegen.

Fig. 7a, b, c sollen den Fall verdeutlichen, bei dem die Boden- oder Verkehrsfläche 8 nicht parallel zum Maschinenrahmen 4 verläuft, wobei eine Korrektur des von den Messeinrichtungen angezeigten Frästiefenmesswertes aufgrund eines Winkelfehlers erfolgen muss, da durch eine Längsneigung des Maschinenrahmens 4 das Messsignal in Höhe des Abstreifschildes 15 oder einer zweiten Tasteinrichtung in der Nähe der Abstreifeinrichtung 15 verfälscht wird. Aufgrund der feststehenden geometrischen Verhältnisse, nämlich dem Abstand des Abstreifschildes 15 von der Drehachse der Fräswalze 6 lässt sich bei Kenntnis der Winkelabweichung zu der Horizontalen in Fahrtrichtung der gemessene Frästiefenwert korrigieren und die aktuelle Frästiefe in Höhe der Fräswalzenachse berechnen. Die Winkelabweichung in Fahrtrichtung lässt sich beispielsweise aus der Stellung der Hubsäulen 12,13 der Kettenlaufwerke 2,3 oder der Kolbenzylinder-Einheiten 30, 32 bestimmen.

Aus den Figuren 7a bis 7c ist auch ersichtlich, in welchem Umfang die Seitenschilder 10 relativ zum Maschinenrahmen 4 schwenkbar sind. Da die Kolbenzylindereinheiten 30, 32 auch mit Wegmesssystemen versehen sind, können diese Messsignale zur Bestimmung des Abstandes der Seitenschilder 10 von dem Maschinenrahmen 4 alternativ zu Seilzugsensoren 21 verwendet werden.

Figur 7c zeigt die Position des mindestens einen Seitenschildes 10 bei bodenparalleler Position des Maschinenrahmens 4. Das in den Figuren 7a bis 7c gezeigte Abstreifschild 15 befindet sich an dem Walzenkasten 9, so dass der Abstand des Abstreifschildes 15 von der Drehachse der Fräswalze 6 eindeutig bestimmbar ist, um eine Berechnung der Frästiefenkorrektur zu ermöglichen, wenn der Maschinenrahmen 4 nicht bodenparallel ist.

Die Steuerung 23 kann aus den erhaltenen Wegmesssignalen die aktuelle Frästiefe in Höhe der Fräswalzenachse berechnen und gegebenenfalls auch ein Steuersignal für die Höhenverstellung der Fräswalze 6 erzeugen.

Vorzugsweise kann die Steuerung 23 den Hubzustand der in Fahrtrichtung hinteren, mindestens einen Hubsäule 13 automatisch zur Herstellung der Parallelität des Maschinenrahmens 4 zu der Boden- oder Verkehrsfläche 8 oder zur Horizontalen oder zu einer vorgegebenen gewünschten Fräsebene regeln.

## Patentansprüche

1. Selbstfahrende Straßenbaumaschine (1), insbesondere Kaltfräse, mit
- einem Maschinenrahmen (4),
- einem Fahrwerk, das den Maschinenrahmen (4) über Hubsäulen (12,13) trägt,
- einer an dem Maschinenrahmen (4) gelagerten Fräswalze (6) zum Bearbeiten einer Boden- oder Verkehrsfläche (8),
- höhenverstellbaren Seitenschildern (10) als Kantenschutz, die auf der zu bearbeitenden Boden- oder Verkehrsfläche (8) aufliegen,
- einer höhenverstellbaren Abstreifeinrichtung (14), die in Fahrtrichtung hinter der Fräswalze (6) angeordnet ist und im Betrieb in die von der Fräswalze (6) erzeugte Frässpur (17) absenkbar ist, und
- einer Steuereinrichtung (23) zum Steuern der Frästiefe der Fräswalze (6),
**dadurch gekennzeichnet,dass**
mindestens eine erste Tasteinrichtung auf der zu bearbeitenden Boden- oder Verkehrsfläche (8) aufliegt und eine zweite Tasteinrichtung auf die Oberfläche der Frässpur (17) absenkbar ist, wobei mindestens eine Messeinrichtung (16) die Verlagerung der ersten Tasteinrichtung relativ zu der zweiten Tasteinrichtung oder jeweils die Verlagerung der ersten und der zweiten Tasteinrichtung relativ zu dem Maschinenrahmen (4) erfasst, wobei die Steuerung (23) aus den Messwerten der mindestens einen Messeinrichtung (16) die aktuelle Frästiefe der Fräswalze (6) ermittelt.

2. Straßenbaumaschine nach Anspruch 1, **dadurch gekennzeichnet, dass** die Steuerung (23) aus den Messwerten der mindestens einen Messeinrichtung (16) die Frästiefe der Fräswalze (6) in Höhe der zweiten Tasteinrichtung ermittelt oder in Höhe der Fräswalzenachse berechnet.

3. Straßenbaumaschine nach Anspruch 1 oder 2, **dadurch gekennzeichnet, dass** die Messeinrichtungen (16) aus Wegmesseinrichtungen bestehen.

4. Straßenbaumaschine nach einem der Ansprüche 1 bis 3, **dadurch gekennzeichnet, dass** die erste Tasteinrichtung aus mindestens einem der beidseitig an den Stirnseiten der Fräswalze (6) relativ zu dem Maschinenrahmen (4) höhenverstellbar und schwenkbar angeordneten Seitenschilder (10) besteht oder dass die Abstreifeinrichtung (14) mindestens einen höhenverstellbaren, in der Abstreifeinrichtung (14) orthogonal zu der Unterkante der Abstreifeinrichtung (14) linear geführten, quer zur Fahrtrichtung verlaufenden Balken (20) als erste Tasteinrichtung aufweist, der neben der Frässpur (17) auf der Boden- oder Verkehrsfläche (8) aufliegt und dessen Position relativ zu der Abstreifeinrichtung (14), vorzugsweise hinsichtlich Höhe und Neigung, von der Messeinrichtung (16) messbar ist.

5. Straßenbaumaschine nach Anspruch 4, **dadurch gekennzeichnet, dass** die Abstreifeinrichtung (14) an den den Seitenschildern (10) zugewandten Seitenkanten jeweils eine Messeinrichtung (16) aufweist, die die relative Verlagerung der Abstreifeinrichtung (14) zu dem mindestens einen Seitenschild (10) misst.

6. Straßenbaumaschine nach einem der Ansprüche 1 bis 5, **dadurch gekennzeichnet, dass** die Tasteinrichtungen mit hydraulischen Einrichtungen gekoppelt sind, die aus Kolben-Zylindereinheiten (26,28) mit integriertem Wegmesssystem bestehen.

7. Straßenbaumaschine nach einem der Ansprüche 1 bis 6, **dadurch gekennzeichnet, dass** zum Anheben oder Absenken der Seitenschilder (10) und/oder der Abstreifeinrichtung (14) mehrere, vorzugsweise jeweils zwei, Kolben-Zylindereinheiten (26,28,30,32) mit integrierten Wegmesssystemen vorgesehen sind, aus deren Wegmesssignalen in Relation zu dem Maschinenrahmen (4) die Steuerung (23) die aktuelle Frästiefe berechnet.

8. Straßenbaumaschine nach Anspruch 1 bis 7, **dadurch gekennzeichnet, dass** mindestens eine der vorderen und/oder hinteren Hubsäulen (12,13) ein Wegmesssystem zum Erfassen des Hubzustandes aufweisen.

9. Straßenbaumaschine nach einem der Ansprüche 1 bis 8, **dadurch gekennzeichnet, dass** der aktuelle Sollwert für die Frästiefe der Fräswalze (6) mit Hilfe der vorderen Hubsäulen (12) einstellbar ist.

10. Straßenbaumaschine nach einem der Ansprüche 1 bis 9, **dadurch gekennzeichnet, dass** die Steuerung (23), die die Messsignale aller Messeinrichtungen (18) der Seitenschilder (10) und/oder Abstreifeinrichtungen (14), sowie aller Hubsäulen (12,13) erhält, in Abhängigkeit von den Wegmesssignalen der Messeinrichtungen (16) und/oder von der gewünschten ortsabhängigen Veränderung eines Sollwertes für die Frästiefe im Verlauf der bearbeiteten Wegstrecke die sich daraus ergebende Hubposition der Hubsäulen (12,13) einstellt.

11. Straßenbaumaschine nach einem der Punkte 1 bis 10, **dadurch gekennzeichnet, dass** das Nullniveau der Messsignale der Messeinrichtungen (16) auf der ungefrästen Boden- oder Verkehrsfläche (8) einstellbar ist.

12. Straßenbaumaschine nach einem der Ansprüche 1 bis 11, **dadurch gekennzeichnet, dass** sich die Fräswalze (6) im wesentlichen über die gesamte Arbeitsbreite des Maschinenrahmens (4) erstreckt und/oder höhenverstellbar in dem Maschinenrahmen (4) gelagert ist.

13. Straßenbaumaschine nach einem der Ansprüche 1 bis 12, **dadurch gekennzeichnet, dass** die Steuerung (23) aus den erhaltenen Wegmesssignalen die aktuelle Frästiefe berechnet und ein Steuersignal für die Höhenverstellung der Fräswalze (6) erzeugt.

14. Verfahren zum Messen der Frästiefe bei Straßenfräsmaschinen (1), bei denen mit Hilfe einer Fräswalze (6) eine Boden- oder Verkehrsfläche (8) gefräst wird, indem die Straßenfräsmaschine (1) zum Fräsen entsprechend der vorgegebenen Frästiefe mit der Fräswalze (6) abgesenkt wird, bei denen ein Seitenschild (10) auf mindestens einer Seite neben der Frässpur (17) auf der unbearbeiteten Boden- und Verkehrsfläche (8) aufgesetzt wird und bei denen in die von der Fräswalze (6) erzeugte Frässpur (17) ein Abstreifschild (15) abgesenkt wird,
**gekennzeichnet durch**
das Messen der Frästiefe der Frässpur (17) **durch** Erfassen der Messwerte mindestens einer ersten, die Lage der unbearbeiteten Boden- und Verkehrsfläche (8) abtastenden Tasteinrichtung in Relation zu den Messwerten einer die Lage des Grundes der Frässpur (17) abtastenden zweiten Tasteinrichtung oder **durch** Messen der Messwerte beider Tasteinrichtungen in Relation zu dem Maschinenrahmen (4), wobei die Seitenkanten neben der Frässpur (17) von Seitenschildern (10) niedergehalten werden, und mindestens eines der Seitenschilder (10) als erste Tasteinrichtung verwendet wird.

15. Verfahren nach Anspruch 14, **gekennzeichnet durch** das Korrigieren des gemessenen Frästiefenwertes in Abhängigkeit von dem Abstand zwischen der zweiten Tasteinrichtung und der Drehachse der Fräswalze (6), wenn der Maschinenrahmen (4) der Straßenfräsmaschine nicht parallel zu der Boden- oder Verkehrsfläche (8) verläuft.

## Claims

1. A self-propelling road milling machine (1), particularly a cold-milling machine, comprising
- a machine frame (4),
- a track assembly carrying the machine frame (4) via lifting columns (12,13),
- a milling roller (6) supported on the machine frame (4) for treatment of a ground or traffic surface (8),
- height-adjustable side plates (10) for edge protection, arranged to rest on the ground or traffic surface (8) to be treated,
- a height-adjustable stripping means (14) arranged in the moving direction behind the milling roller (6) and adapted to be lowered, during operation, into the milling track (17) generated by the milling roller (6), and
- a control means (23) for controlling the milling depth of the milling roller (6),
**characterized in that**
at least one first sensor means is resting on the ground or traffic surface (8) to be treated, and a second sensor means is adapted to be lowered onto the surface of the milling track (17), at least one measuring means (16) detecting the displacement of the first sensor means relative to the second sensor means or respectively the displacement of the first and the second sensor means relative to the machine frame (4), the control means (23) obtaining the current milling depth of the milling roller (6) from the measurement values of the at least one measuring means (16).

2. The road milling machine according to claim 1, **characterized in that** the control means (23) obtains the milling depth of the milling roll (6) at the level of the second sensor means or at the level of the milling roller axis from the measurement values of the at least one measuring means (16).

3. The road milling machine according to claim 1 or 2, **characterized in that** the measuring means (16) comprise position-sensing means.

4. The road milling machine according to any one of claims 1 to 3, **characterized in that** the first sensor means comprises at least one of the side plates (10) which are arranged on both sides on the end sides of the milling roll (6) in a height-adjustable and pivotable manner relative to the machine frame (4), or that the the stripping means (14) comprises at least one height-adjustable beam (20) which in the stripping direction (14) is guided orthogonally to the lower edge of the stripping means (14), and which extends transversely to the moving direction, said beam serving as a first sensor means, with said beam resting on the ground or traffic surface (8) adjacent to the milling track (17), and with the position of the beam being measurable relative to the stripping means (14), preferably with respect to height and inclination, by the measuring means (16).

5. The road milling machine according to claim 4, **characterized in that** the stripping means (14) on the side edges facing towards the side plates (10) comprises respectively one measuring means (16) for measuring the relative displacement of the stripping means (14) relative to the at least one side plate (10).

6. The road milling machine according to any one of claims 1 to 5, **characterized in that** the sensor means are coupled to hydraulic means formed by piston/cylinder units (26,28) with an integrated position sensing system.

7. The road milling machine according to any one of claims 1 to 6, **characterized in that**, for lifting or lowering the side plates (10) and/or the stripping means (14), a plurality, preferably respectively two piston/cylinder units (26,28,30,32) with integrated position-sensing systems are provided, the position-sensing signals of the position-sensing systems relative to the machine frame (4) being used by the control means (23) for computing the current milling depth.

8. The road milling machine according to any one of claims 1 to 7, **characterized in that** at least one of the front and/or rear lifting columns (12,13) is provided with an position-sensing system for detecting the lifting condition.

9. The road milling machine according to any one of claims 1 to 8, **characterized in that** the current desired value for the milling depth of the milling roll (6) is adjustable by means of the front lifting columns (12).

10. The road milling machine according to any one of claims 1 to 9, **characterized in that** the control means (23) receiving the measuring signals of all measuring means (18) of the side plates (10) and/or stripping means (14) as well as all lifting columns (12,13), is operative to set, in dependence on the position-sensing signals of the measuring means (16) and/or on the desired position-dependent change of a desired value for the milling depth, the resultant lifting position of the lifting columns (12,13) in the course of the treated length of path.

11. The road milling machine according to any one of claims 1 to 10, **characterized in that** the zero level of the measuring signals of the measuring means (16) on the unmilled ground or traffic surface (8) is settable.

12. The road milling machine according to any one of claims 1 to 11, **characterized in that** the milling roller (6) extends substantially across the whole working depth of the machine frame (4) and/or is supported in a height-adjustable manner in the machine frame (4).

13. The road milling machine according to any one of claims 1 to 12, **characterized in that** the control means (23) obtains the current milling depth from the received position-sensing signals and generates a control signal for the height adjustment of the milling roll (6).

14. A method for measuring the milling depth in road milling machines (1) which are operative to mill a ground or traffic surface (8) by means of a milling roll (6) in that, for milling, the road milling machine (1) with the milling roll (6) is lowered corresponding to the predetermined milling depth, in which road milling machines a side plate (10) will at least on one side be placed adjacent the milling track (17) onto the untreated ground or traffic surface (8), and a stripping plate (15) will be lowered into the milling track (17) generated by the milling roll (6),
**characterized by**
measuring of the milling depth of the milling track (17) by detecting the measurement values of at least one first sensor means sensing the position of the untreated ground or traffic surface (8) in relation to the measurement values of a second sensor means sensing the position of the ground of the milling track (17) or by measuring the measurement values of both sensor means in relation to the machine frame (4), wherein the side edges adjacent to the milling track (17) are held down by side plates (10) and at least one of the side plates (10) is used as the first sensor means.

15. The method according to claim 14, **characterized by** correction of the measured milling-depth value in dependence on the distance between said second senor means and the rotational axis of the milling roller (6) when the machine frame (4) of the road milling machine does not extend parallel to the ground or traffic surface (8).

## Revendications

1. Engin automoteur de construction routière (1), en particulier fraiseuse routière à froid, avec
- un châssis de machine (4),
- un train de roulement qui supporte le châssis de machine (4) par l'intermédiaire de colonnes de levage (12, 13),
- un tambour de fraisage (6) logé au niveau du châssis de la machine (4) et destiné au traitement d'une surface de sol ou d'une surface de circulation (8),
- des panneaux latéraux (10) réglables en hauteur, servant de protection de la bordure et qui reposent sur la surface de sol ou sur la surface de circulation (8) à traiter,
- un système de séparation (14) réglable en hauteur, qui est disposé dans la direction de la conduite à l'arrière du tambour de fraisage (6) et qui, lors du fonctionnement de la machine, peut être abaissé dans la bande de fraisage (17) produite par le tambour de fraisage (6), et
- un système de commande (23) destiné à la commande de la profondeur de fraisage du tambour de fraisage (6),
**caractérisé en ce que**
au moins un premier système de détection repose sur la surface de sol ou sur la surface de circulation (8) à traiter et un deuxième système de détection peut être abaissé sur la surface de la bande de fraisage (17), au moins un système de mesure (16) enregistrant le déplacement du premier système de détection par rapport au deuxième système de détection, ou enregistrant respectivement le déplacement du premier et du deuxième système de détection par rapport au châssis de la machine (4), la commande (23) déterminant la profondeur actuelle de fraisage du tambour de fraisage (6) à partir des valeurs de mesure d'au moins l'un des systèmes de mesure (16).

2. Engin de construction routière selon la revendication 1, **caractérisé en ce que** la commande (23) détermine la profondeur de fraisage du tambour de fraisage (6) à la hauteur du deuxième système de détection à partir des valeurs de mesure d'au moins l'un des systèmes de mesure (16), ou la calcule à la hauteur de l'axe du tambour de fraisage.

3. Engin de construction routière selon la revendication 1 ou 2, **caractérisé en ce que** les systèmes de mesure (16) sont composés de systèmes de la mesure du déplacement.

4. Engin de construction routière selon l'une des revendications 1 à 3, **caractérisé en ce que** le premier système de détection est composé d'au moins l'un des panneaux latéraux (10) réglables en hauteur et disposés de manière pivotante des deux côtés au niveau des faces frontales du tambour de fraisage (6), par rapport au châssis de la machine (4), ou **caractérisé en ce que** le système de séparation (14) présente au moins une poutrelle (20) servant de premier système de détection, réglable en hauteur, s'étendant transversalement par rapport à la direction de la conduite, guidée de manière linéaire dans le système de séparation (14) et de manière orthogonale par rapport à la bordure inférieure du système de séparation (14), cette poutrelle reposant à côté de la bande de fraisage (17), sur la surface de sol ou sur la surface de circulation (8), et dont la position par rapport au système de séparation (14) peut être mesurée par le système de mesure (16), de préférence en ce qui concerne la hauteur et l'inclinaison.

5. Engin de construction routière selon la revendication 4, **caractérisé en ce que** le système de séparation (14) présente respectivement, au niveau des bordures latérales faisant face aux panneaux latéraux (10), un système de mesure (16) qui mesure le déplacement relatif du système de séparation (14) par rapport à au moins l'un des panneaux latéraux (10).

6. Engin de construction routière selon l'une des revendications 1 à 5, **caractérisé en ce que** les systèmes de détection sont couplés à des systèmes hydrauliques qui sont composés d'unités à pistons et à cylindres (26, 28) avec système intégré de la mesure du déplacement.

7. Engin de construction routière selon l'une des revendications 1 à 6, **caractérisé en ce que**, pour l'élévation ou pour l'abaissement des panneaux latéraux (10) et/ou du système de séparation (14), sont prévus plusieurs, de préférence deux respectivement, unités à pistons et à cylindres (26, 28, 30, 32), avec systèmes intégrés de la mesure du déplacement, à partir des signaux de la mesure du déplacement desquels la commande (23) calcule la profondeur actuelle de fraisage en relation avec le châssis de la machine (4).

8. Engin de construction routière selon la revendication 1 à 7, **caractérisé en ce qu'**au moins l'une des colonnes de levage (12, 13) avant et/ou arrière présentent un système de la mesure du déplacement destiné à l'enregistrement de l'état de levage.

9. Engin de construction routière selon l'une des revendications 1 à 8, **caractérisé en ce que** la valeur nominale actuelle pour la profondeur de fraisage du tambour de fraisage (6) peut être réglée à l'aide des colonnes de levage (12) avant.

10. Engin de construction routière selon l'une des revendications 1 à 9, **caractérisé en ce que** la commande (23), qui reçoit les signaux de mesure de tous les systèmes de mesure (18) des panneaux latéraux (10) et/ou des systèmes de séparation (14), ainsi que de toutes les colonnes de levage (12, 13), ajuste la position de levage des colonnes de levage (12, 13) qui en résulte, en fonction des signaux de la mesure du déplacement des systèmes de mesure (16) et/ou de la modification souhaitée, selon le lieu, d'une valeur nominale pour la profondeur de fraisage au cours de la distance du tronçon traité.

11. Engin de construction routière selon l'une des revendications 1 à 10, **caractérisé en ce que** le niveau zéro des signaux de mesure des systèmes de mesure (16) peut être réglé sur la surface de sol ou de circulation (8) non fraisée.

12. Engin de construction routière selon l'une des revendications 1 à 11, **caractérisé en ce que** le tambour de fraisage (6) s'étend pour l'essentiel sur toute la largeur de travail du châssis de la machine (4) et/ou est positionné de manière réglable en hauteur dans le châssis de la machine (4).

13. Engin de construction routière selon l'une des revendications 1 à 12, **caractérisé en ce que** la commande (23) calcule la profondeur actuelle de fraisage à partir du signal de la mesure du déplacement reçu et génère un signal de commande pour le réglage de la hauteur du tambour de fraisage (6).

14. Procédé destiné à la mesure de la profondeur de fraisage pour les fraiseuses routières (1), pour lesquelles une surface de sol ou une surface de circulation (8) est fraisée à l'aide d'un tambour de fraisage (6), en abaissant la fraiseuse routière (1) avec le tambour de fraisage (6) en vue de procéder aux travaux de fraisage conformément à la profondeur de fraisage prédéterminée, pour lesquelles un panneau latéral (10) est mis en place sur au moins une face, à côté de la bande de fraisage (17), sur la surface de sol et sur la surface de circulation (8) non traitées, et pour lesquelles un panneau de séparation (15) est abaissé dans la bande de fraisage (17) produite par le tambour de fraisage (6),
**caractérisé en ce que**
la mesure de la profondeur de fraisage de la bande de fraisage (17) est déterminée par l'enregistrement des valeurs de mesure d'au moins un premier système de détection, détectant la position de la surface de sol et de la surface de circulation (8) non traitées, en relation avec les valeurs de mesure d'un deuxième système de détection détectant la position de la base de la bande de fraisage (17), ou bien par la mesure des valeurs de mesure des deux systèmes de détection en relation avec le châssis de la machine (4), les bordures latérales situées à côté de la bande de fraisage (17) étant maintenues vers le bas par des panneaux latéraux (10), et au moins l'un des panneaux latéraux (10) étant utilisé comme premier système de détection.

15. Procédé selon la revendication 14, **caractérisé par** la correction de la valeur mesurée de la profondeur de fraisage en fonction de la distance entre le deuxième système de détection et l'axe de rotation du tambour de fraisage (6), lorsque le déplacement du châssis de la machine (4) de la fraiseuse routière n'est pas parallèle à la surface de sol ou à la surface de circulation (8).
